# DEMANDE DE BREVET EUROPEEN

(11) **EP 4 703 783 A1**
(43) Date de publication de la demande: **04.03.2026**
(21) Numéro de dépôt: 25197528.0
(22) Date de dépôt: 22.08.2025
(51) Int. Cl.: G02B 6/44, G02B 6/38

(54) **BOITIER POUR ENROULEMENT DE CABLE DE TELECOMMUNICATIONS**

(30) Priorité: 30.08.2024 EP 24315401; 23.12.2024 FR 2415194
(71) Demandeur: Telenco, 38430 Moirans (FR)
(72) Inventeur: BOUVARD, Romuald, 38430 MOIRANS (FR)
(74) Mandataire: Cabinet Beaumont

(57) **Abrégé**

La présente description concerne un boîtier (150) pour enroulement de câble (107) comprenant :
- une embase (103) ;
- une bobine (105) d'enroulement du câble montée à rotation par rapport à l'embase ;
- une plaquette (109) de réception d'au moins un ensemble pré-connectorisé (111) du câble, la plaquette étant montée à rotation coaxialement à la bobine ; et
- des éléments de blocage de la position angulaire de la plaquette par rapport à la bobine.

## Description

### Domaine technique

La présente description concerne de façon générale les installations de télécommunications, et plus particulièrement les points de branchement optique (PBO) destinés à permettre un raccordement par fibre optique entre des dispositifs d'un réseau optique.

### Technique antérieure

Divers types de points de branchement optique ont été proposés. Dans le cas d'une installation dans un immeuble d'habitation, le point de branchement optique est dit « intérieur » et est par exemple installé, dans l'immeuble, sur un palier de l'immeuble à l'extérieur des appartements d'habitation.

Un inconvénient des points de branchement optique existants, notamment des points de branchement optique intérieurs, est que leur mise en œuvre requiert, de la part de l'installateur, la réalisation d'opérations chronophages et très délicates qui, en cas de retard ou d'erreur de manipulation, entraînent un manque à gagner pour la société qui emploie l'installateur et une insatisfaction des abonnés. L'installateur est en outre contraint d'utiliser un matériel spécifique et de former les opérateurs.

### Résumé de l'invention

Il existe un besoin d'améliorer les points de branchement optique existants et les procédés existants d'installation de points de branchement optique.

En particulier, il existe un besoin de simplifier les opérations mises en œuvre par un installateur lors de la pose et du câblage, ou raccordement, d'un point de branchement optique.

Pour cela, un mode de réalisation prévoit un boîtier pour enroulement de câble comprenant :
- une embase ;
- une bobine d'enroulement du câble montée à rotation par rapport à l'embase ;
- une plaquette de réception d'au moins un ensemble pré-connectorisé du câble, la plaquette étant montée à rotation coaxialement à la bobine ; et
- des éléments de blocage de la position angulaire de la plaquette par rapport à la bobine.

Selon un mode de réalisation, les éléments de blocage de la position angulaire de la plaquette par rapport à la bobine comprennent, côté bobine, au moins deux orifices répartis annulairement et, côté plaquette, au moins un ergot.

Selon un mode de réalisation, la bobine comprend, de part et d'autre d'un moyeu de réception du câble, un premier flasque côté embase et un deuxième flasque côté plaquette.

Selon un mode de réalisation, les orifices sont situés en périphérie du deuxième flasque.

Selon un mode de réalisation, la plaquette est destinée à être tournée par rapport à la bobine de sorte que ledit au moins un ensemble pré-connectorisé se trouve approximativement face à au moins une sortie de câble du boîtier.

Selon un mode de réalisation, la plaquette est destinée à recevoir plusieurs ensembles pré-connectorisés alignés et destinés à se trouver respectivement face à plusieurs sorties de câble du boîtier.

Selon un mode de réalisation, la plaquette comprend un amincissement formant charnière et des encoches situées dans une couronne externe de la plaquette, dans le prolongement de l'amincissement.

Selon un mode de réalisation, le boîtier comprend en outre des éléments de blocage de la position angulaire de la bobine par rapport à l'embase.

Selon un mode de réalisation, les éléments de blocage de la position angulaire de la bobine par rapport à l'embase et les éléments de blocage de la position angulaire de la plaquette par rapport à la bobine sont agencés de sorte qu'à chaque position angulaire de blocage de la bobine par rapport à l'embase corresponde une position angulaire de blocage de la plaquette par rapport à la bobine dans laquelle le ou les ensembles pré-connectorisés se trouvent approximativement face à la ou aux sorties de câble du boîtier.

Selon un mode de réalisation, les éléments de blocage de la position angulaire de la bobine par rapport à l'embase comprennent, côté bobine, une roue crantée et, côté embase, un bouton de blocage adapté à être translaté coaxialement à la bobine et coopérant avec la roue crantée.

Selon un mode de réalisation, le nombre d'orifices est égal au nombre de crans de la roue crantée, les orifices étant alignés radialement par rapport aux crans.

Un mode de réalisation prévoit un point de branchement optique comprenant :
- le boîtier tel que décrit précédemment ; et
- un câble optique enroulé sur la bobine et comprenant des première et deuxième extrémités destinées à être raccordées respectivement à l'extérieur du boîtier et audit au moins un ensemble pré-connectorisé.

Un mode de réalisation prévoit un procédé d'installation du point de branchement optique tel que décrit précédemment, le procédé comprenant les étapes successives suivantes :
a) déroulage du câble optique par traction sur sa première extrémité entraînant une rotation de la bobine et de la plaquette autour de l'axe de rotation de la bobine, ledit au moins un ergot se trouvant dans un premier orifice parmi lesdits au moins deux orifices ;
b) désengagement dudit au moins un ergot par rapport au premier orifice, par déformation de la plaquette ;
c) rotation de la plaquette par rapport à la bobine ; et
d) engagement dudit au moins un ergot dans un deuxième orifice parmi lesdits au moins deux orifices.

Selon un mode de réalisation, à l'étape c), la plaquette est tournée par rapport à la bobine de sorte que le ou les ensembles pré-connectorisés se trouvent approximativement face à la ou aux sorties de câble du boîtier.

Selon un mode de réalisation, le procédé comprend en outre, en utilisant les éléments de blocage de la position angulaire de la bobine par rapport à l'embase :
- préalablement à l'étape a), une étape de libération de la rotation de la bobine par rapport à l'embase ; et
- entre les étapes a) et b), une étape de blocage de la rotation de la bobine par rapport à l'embase.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective éclatée d'un point de branchement optique selon un mode de réalisation ;
la figure 2, la figure 3, la figure 4, la figure 5, la figure 6, la figure 7 et la figure 8 sont des vues en perspective illustrant des étapes successives d'un procédé d'installation du point de branchement optique de la figure 1 selon un mode de réalisation ; et
la figure 9 est une vue en perspective d'une partie du point de branchement optique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différentes applications des boîtiers pour enroulement de câble de télécommunications de la présente description et les divers dispositifs susceptibles d'intégrer ces boîtiers n'ont pas été détaillés, les modes de réalisation décrits étant compatibles avec toutes ou la plupart des applications usuelles et avec tous ou la plupart des dispositifs usuels mettant en œuvre au moins un boîtier pour enroulement de câble de télécommunications, moyennant éventuellement des adaptations à la portée de la personne du métier à la lecture de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Sauf précision contraire, l'expression « en contact avec » signifie « en contact mécanique avec ».

Un des objectifs visés par les modes de réalisation décrits est de fournir un point de branchement optique intermédiaire, ou intérieur. Le point de branchement optique intermédiaire de la présente description est par exemple destiné à être raccordé, en amont, à un autre point de branchement optique, par exemple un boîtier immeuble ou un boîtier étage. Le point de branchement optique intermédiaire comporte, pour cela, une rallonge de câble pré-connectorisé. Le point de branchement optique intermédiaire de la présente description est en outre destiné à être raccordé, en aval, à un ou plusieurs points de terminaison optique (PTO) pré-connectorisés.

Le point de branchement optique intermédiaire de la présente description est par exemple destiné à être installé sur un palier d'un immeuble à l'extérieur d'un logement d'habitation, par exemple un appartement, d'un abonné à un réseau fibre optique. Le point de branchement optique intermédiaire, aussi appelé boîtier d'étage (BE) ou boîtier de palier (BDP), relie par exemple des PTO installés dans chaque logement à un point réseau vertical de l'immeuble, par exemple un boîtier immeuble ou un boîtier étage. Dans le cas d'une maison, le point de branchement optique est dit « extérieur » (PBOE). Il est installé par exemple dans une armoire ou sur un appui aérien. Le point de branchement optique extérieur est typiquement utilisé pour raccorder des maisons individuelles. Les points de terminaison optique (PTO) sont destinés à être placés dans les logements d'habitation et permettent à un abonné d'accéder à des offres et services fournis par une société exploitant, ou opérant, le réseau optique auquel est raccordé un terminal optique. Le point de branchement optique de la présente description est par exemple destiné à raccorder des PTO situés à un même étage, voire l'intégralité des PTO présents dans un immeuble.

Les opérations de pose et de raccordement du câble optique constituent une difficulté pour l'installateur, dans la mesure où le câble optique, contenant par exemple une pluralité de fibres optiques, est fragile et peut facilement être détérioré en cas de mauvaise manipulation. En particulier, les opérations de raccordement des fibres optiques contenues dans le câble à des fiches ou à des prises de connecteurs ou raccords sont source d'un grand risque de casse ou de dysfonctionnements, du fait par exemple de la nécessité de réaliser un clivage, une épissure par fusion, etc. de la fibre optique.

En outre, il existe une grande diversité d'immeubles où le point de branchement optique est susceptible d'être installé. Afin de s'adapter aux différentes situations rencontrées, il est prévu que le point de branchement optique intermédiaire de la présente description contienne un câble optique pré-connectorisé présentant une longueur suffisante pour permettre de raccorder le point de branchement optique dans la majorité des cas, par exemple à un boîtier immeuble ou étage séparé du point de branchement optique intermédiaire par une distance variable d'un étage à l'autre.

Les modes de réalisation décrits prévoient un boîtier permettant l'enroulement d'un câble « pré-connecté » ou « pré-connectorisé », c'est-à-dire muni de connecteurs voire de raccords, à au moins l'une des extrémités de chaque fibre préalablement à son enroulement dans le boîtier. Cela permet un gain de temps lors de l'installation et du raccordement du point de branchement optique sur site et une forte réduction du risque d'erreur de manipulation.

En outre, les modes de réalisation décrits prévoient un boîtier comprenant une embase et une bobine d'enroulement du câble, permettant de recevoir une rallonge de câble, ainsi que des éléments de blocage d'une rotation de la bobine par rapport à l'embase. Ces éléments de blocage ont pour avantage de permettre de dérouler uniquement la longueur de câble nécessaire au raccordement du point de branchement optique, ce qui évite la présence d'un excédent de câble, ou « mou » de câble, trop important à l'extérieur du point de branchement optique. Cela permet notamment d'éviter les risques de casse, par exemple si le câble venait à être accroché.

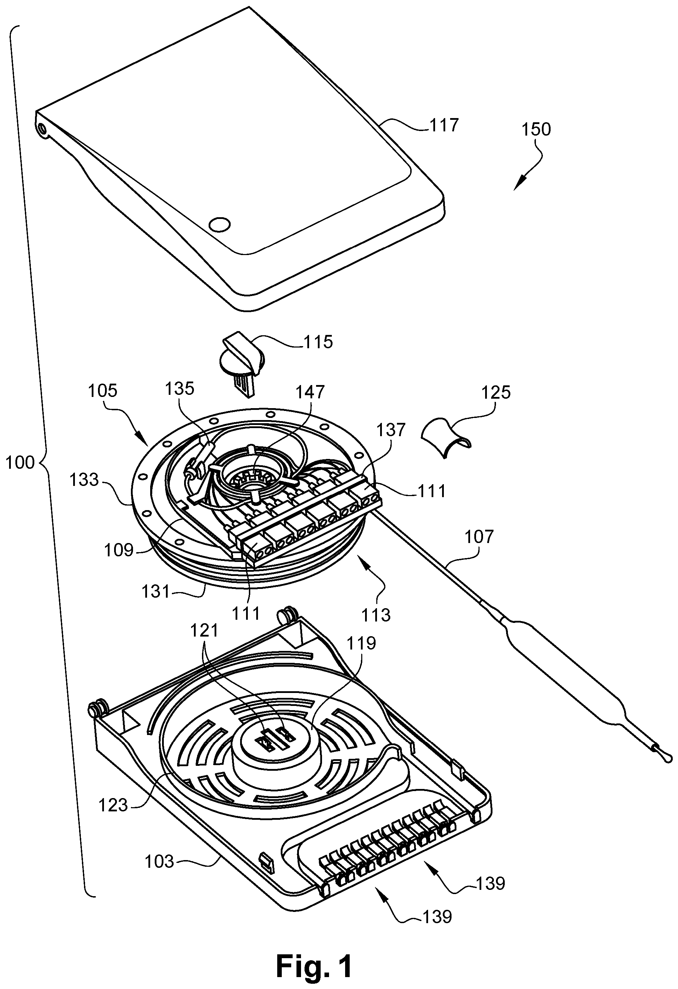

La figure 1 est une vue en perspective éclatée d'un point de branchement optique 100 selon un mode de réalisation.

Dans l'exemple représenté, le point de branchement optique 100 comprend :
- une embase 103 ;
- une bobine 105 montée à rotation par rapport à l'embase 103 et sur laquelle est enroulé un câble optique 107 ;
- une plaquette 109 de réception d'au moins un ensemble pré-connectorisé 111, comprenant un connecteur et un raccord du câble 107, montée à rotation coaxialement à la bobine 105 ;
- des éléments 113 de blocage de la position angulaire de la plaquette 109 par rapport à la bobine 105 ;
- un bouton 115 de blocage de la position angulaire de la bobine 105 par rapport à l'embase 103 ; et
- un couvercle 117, ou capot.

L'embase 103, la bobine 105, la plaquette 109, le bouton 115 et le couvercle 117 sont par exemple en matière plastique. Dans ce cas, chacun de ces éléments est par exemple fabriqué par injection plastique.

Le câble optique 107 comprend par exemple une pluralité de fibres optiques, par exemple douze fibres optiques (câble optique dit « 12 FO »).

Dans l'exemple représenté, l'embase 103 comprend :
- des ouvertures, par exemple des trous oblongs, permettant de fixer l'embase sur un support tel qu'un mur, par exemple au moyen de vis et de chevilles ;
- un moyeu 119 sensiblement cylindrique sur lequel est inséré la bobine 105 et autour duquel la bobine peut tourner lorsque la rotation n'est pas bloquée par le bouton 115 ;
- des éléments 121, ou ergots, de maintien de la bobine 105 sur le moyeu 119, de sorte qu'une fois la bobine 105 accouplée au moyeu 119 elle ne puisse plus se translater le long de son axe de rotation (axe vertical, dans l'orientation de la figure 1) ;
- une couronne externe 123 de maintien du câble 107 autour de la bobine 105 ;
- un élément de guidage 125 du câble 107 ; et
- des éléments de fixation du couvercle 117, par exemple des clips.

Dans l'exemple illustré, la bobine 105 comprend :
- un flasque inférieur 131 situé côté embase 103, le flasque 131 pouvant être constitué d'un disque plein, d'un disque percé ou d'un ensemble d'ailettes radiales ; et
- un flasque supérieur 133 situé côté couvercle 117 et permettant le passage d'une partie du câble 107 à l'extrémité de laquelle est situé un séparateur 135 couramment désigné par son appellation anglo-saxonne « FanOut » et duquel sort un fouet de fibres.

La bobine 105 est par exemple destinée à recevoir une réserve de câble optique pré-connectorisé formant une rallonge de câble optique.

La majeure partie du câble 107 est enroulée sur un moyeu, ou tambour, de la bobine 105 de part et d'autre duquel sont situés les flasques 131 et 133. Le câble 107 est destiné à être déroulé en partie à l'extérieur du boîtier 100 pour raccordement à un boîtier étage (BPE) ou un point de branchement immeuble (PBI). Une toute petite partie du câble 107 est destinée à rester à l'intérieur du boîtier et forme par exemple moins d'une spire située au-dessus du flasque supérieur 133.

Dans l'exemple représenté, la plaquette 109, ou plaque support raccords, comprend :
- un élément de maintien du séparateur 135 ;
- un élément de maintien 137 destiné à recevoir plusieurs ensembles pré-connectorisés 111 alignés et destinés à se trouver respectivement face à plusieurs sorties de câble 139 du boîtier ; et
- des ailettes de maintien du faisceau de fibres.

À titre de variante, un élément de maintien destiné à recevoir un seul ensemble pré-connectorisé 111 est prévu.

En partie supérieure, la bobine 105 comprend en outre une roue crantée 147, ou roue dentée, destinée à coopérer avec le bouton 115. La roue crantée 147 est par exemple formée dans le flasque inférieur 131.

Dans l'exemple illustré, le bouton 115 porte des dents, ou ergots, destinées à être engagées dans des espaces, ou rainures, situés entre les crans, ou dents, de la roue crantée 147. Pour permettre d'empêcher la rotation de la bobine 105, c'est-à-dire de bloquer sa position angulaire, par rapport à l'embase 103, le bouton 115 comprend en outre une partie inférieure sensiblement parallélépipédique, s'étendant verticalement le long d'une direction orthogonale à une partie supérieure en forme de disque sous laquelle sont situées les dents destinées à être engagées dans la roue crantée 147, la partie inférieure du bouton 115 étant destinée à s'insérer dans une fente formée en partie supérieure du moyeu 119, entre les éléments de maintien 121. Cela correspond à une position bloquée, ou verrouillée, de la bobine 105. Dans une position débloquée, ou déverrouillée, de la bobine 105, les dents du bouton 115 sont désengagées des espaces situés entre les crans de la roue 147 et la partie inférieure du bouton 115 est désengagée de la fente du moyeu 119. Cela libère ainsi la rotation de la bobine 105 par rapport au moyeu 119 porté par l'embase 103. À titre d'exemple, le bouton 115 comporte quatre dents réparties en forme de croix.

Le bouton 109 est par exemple maintenu solidaire de l'embase 103 par un pion, ou ergot, de l'embase s'insérant dans une rainure du bouton 115. Cela rend le bouton 115 « imperdable ».

Les éléments de blocage de la position angulaire de la bobine 105 par rapport à l'embase 103, comprenant la roue 147 et le bouton 115, peuvent être réalisés de manière différente de celle illustrée en figure 1. Par ailleurs, ces éléments de blocage sont optionnels.

L'embase 103 comprend par exemple des perçages et/ou découpes permettant de brancher dans le ou les ensembles pré-connectorisés 111 des fiches situées à des extrémités de câbles optiques comprenant chacun une seule fibre optique de branchement, par exemple, à un point de terminaison optique (PTO).

L'embase 103, la bobine 105, la plaquette 109, le bouton 115 et le couvercle 117 du point de branchement optique 100 font partie d'un boîtier 150 pour enroulement de câble de télécommunications.

Le couvercle 117 est lié mécaniquement à l'embase 103 par une charnière.

Bien que la figure 1 illustre un exemple dans lequel l'élément de guidage 125 est, en vue de face, situé en partie droite du point de branchement optique, cet exemple n'est pas limitatif et l'élément de guidage 125 peut, à titre de variante, être situé en partie gauche.

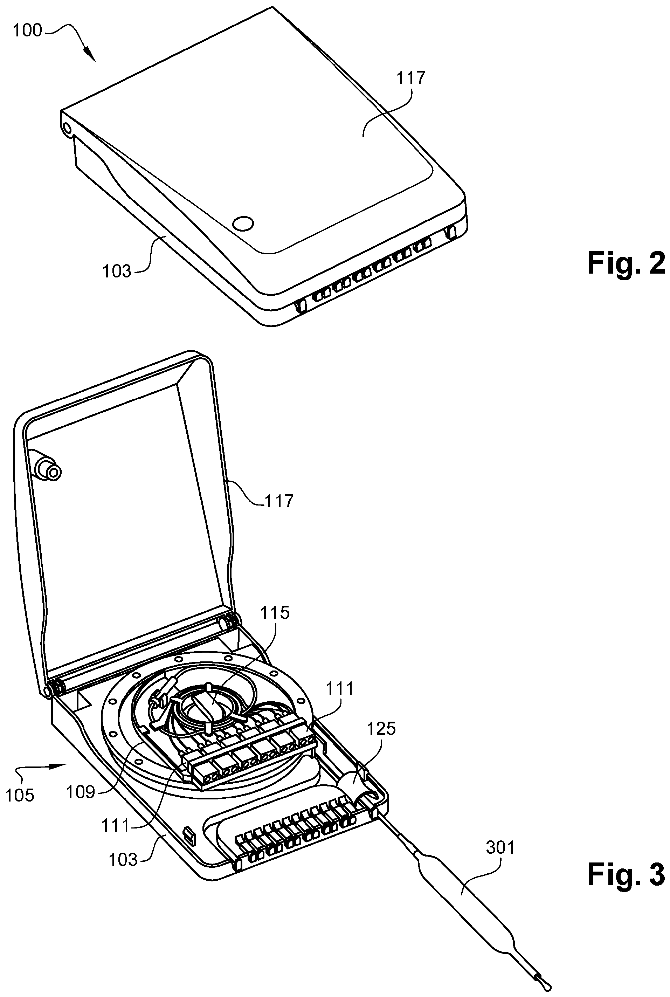

La figure 2, la figure 3, la figure 4, la figure 5, la figure 6, la figure 7 et la figure 8 sont des vues en perspective illustrant des étapes successives d'un procédé d'installation du point de branchement optique 100 de la figure 1 selon un mode de réalisation.

La figure 2 illustre un état du point de branchement optique 100 avant ou après fixation à un support (non représenté), par exemple un mur, et avant raccordement.

À cette étape, le couvercle 117 est fermé et le câble 107 est intégralement contenu à l'intérieur du point de branchement optique 100. Les ensembles 111 sont pré-connectorisés ou pré-câblés, c'est-à-dire que chaque fibre optique du câble 107 porte par exemple un connecteur, ou une fiche, inséré dans l'un des raccords à l'intérieur du point de branchement optique 100.

La figure 3 illustre une étape ultérieure d'ouverture du couvercle 117 du point de branchement optique 100.

Le bouton 115 se trouve par exemple dans une position enfoncée, ou engagée, dans laquelle il bloque la position angulaire de la bobine 105 par rapport à l'embase 103.

Le câble 107 porte, à son extrémité opposée aux ensembles pré-connectorisés 111 et destinée à être tirée hors du point de branchement optique 100, une chaussette de tirage 301. Le câble 107 est engagé dans l'élément de guidage 125, au voisinage de la chaussette de tirage 301.

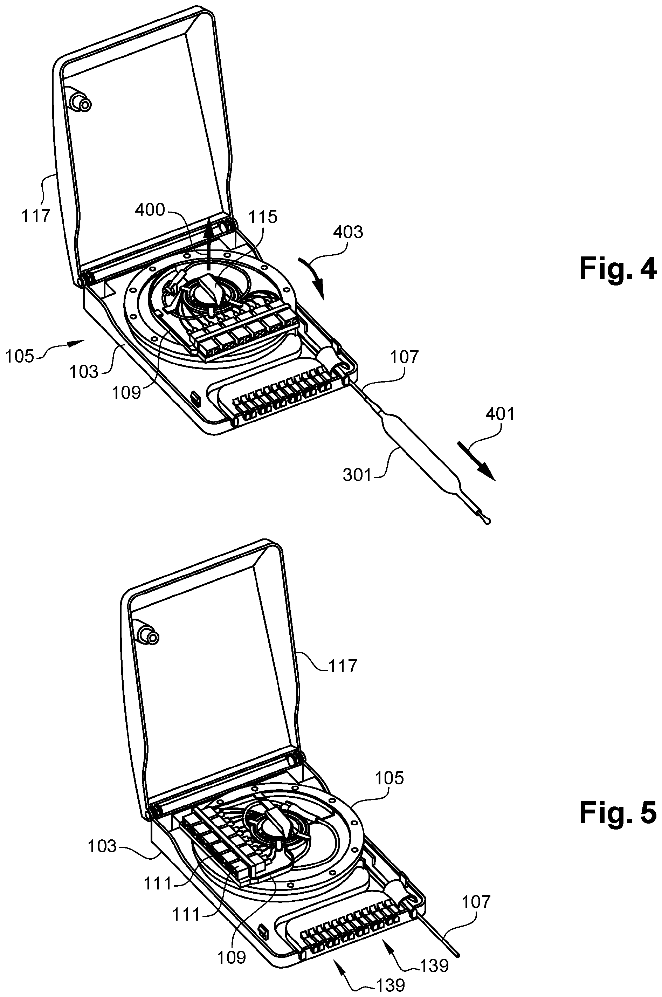

La figure 4 illustre une étape ultérieure de déblocage de la position angulaire de la bobine 105 par rapport à l'embase 103. Pour cela, une opération de désengagement du bouton 115 est mise en œuvre de sorte à libérer la rotation de la bobine 105 par rapport à l'embase 103. Plus précisément, le bouton 115 est translaté vers le haut, coaxialement à la bobine 105, par exemple en exerçant une traction (flèche 400) le long d'un axe sensiblement vertical. Cela provoque la sortie des dents du bouton 115 en dehors des rainures de la roue dentée 147 portée par la bobine 105.

La figure 4 illustre en outre une étape ultérieure de tirage (flèche 401) du câble 107 hors du point de branchement optique 100 par son extrémité munie de la chaussette de tirage 301. Au cours de cette étape, le tirage du câble 107 entraîne une rotation (flèche 403) de la bobine 105 par rapport à l'embase 103. Le boîtier 150 comprend des éléments de blocage de la position angulaire de la plaquette 109 par rapport à la bobine 105. Ces éléments seront exposés plus en détail ci-dessous.

Au cours de la rotation de la bobine 105, la position angulaire de la plaquette 109 par rapport à la bobine 105 est bloquée de sorte que la plaquette 109 demeure solidaire de la bobine 105. Ainsi, la plaquette 109 (et le ou les ensembles pré-connectorisés 111 qu'elle porte) tourne par rapport à l'embase 103 en même temps que la bobine 105. La partie du câble 107 initialement enroulée sur le moyeu de la bobine 105 est dévidée au moins partiellement de la bobine 105 sous l'action du tirage du câble 107, sans gêne et/ou dégradation des différentes pré-connectorisations du câble 107.

La figure 5 illustre une étape ultérieure dans laquelle une longueur de câble 107 suffisante pour permettre le raccordement a été dévidée de la bobine 105. Dans l'exemple illustré, les ensembles pré-connectorisés 111 portés par la plaquette 109 ne sont pas face aux sorties de câble 139. Cela rend le câblage ultérieur des ensembles 111 difficile, voire impossible.

Afin de pallier ce problème, un mode de réalisation prévoit la possibilité de faire tourner la plaquette 109 sans faire tourner la bobine 105, pour permettre de positionner les ensembles pré-connectorisés 111 face aux sorties de câble 139 sans modifier la longueur de câble 107 dévidée.

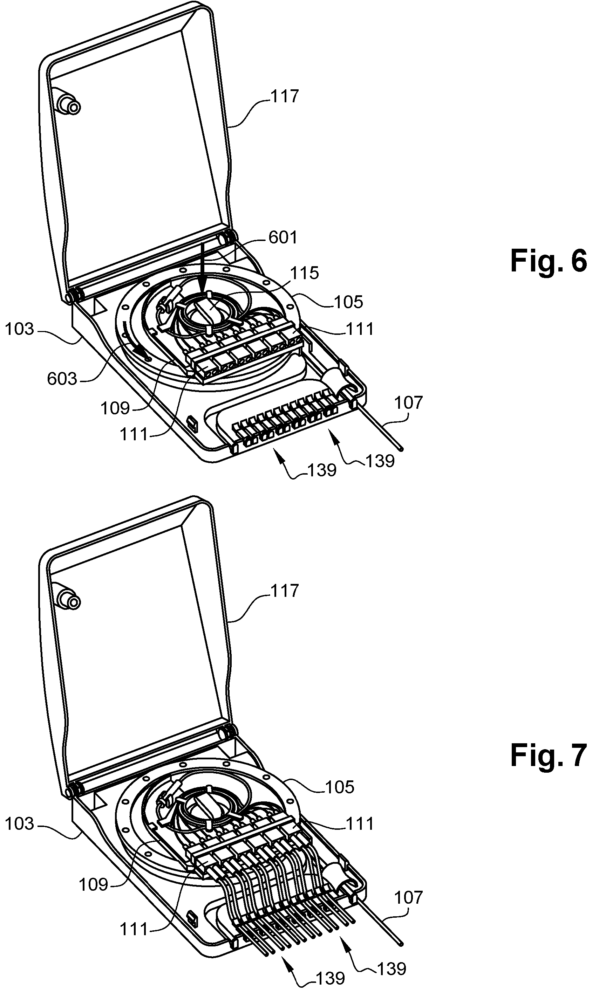

La figure 6 illustre une étape ultérieure de blocage de la position angulaire de la bobine 105 par rapport à l'embase 103. Au cours de cette étape, la position angulaire de la bobine 105 par rapport à l'embase 103 est bloquée par engagement des dents du bouton 115 dans les rainures de la roue dentée 147. Plus précisément, le bouton 109 est translaté vers le bas (flèche 601), coaxialement à la bobine 105, par exemple en exerçant une poussée le long d'un axe sensiblement vertical.

Une fois la position de la bobine 105 bloquée par rapport à l'embase 103, la position angulaire de la plaquette 109 par rapport à la bobine 105 est débloquée de sorte que la plaquette 109 puisse tourner indépendamment de la bobine 105. La plaquette 109 (et le ou les ensembles pré-connectorisés 111 qu'elle porte) est alors tournée (flèche 603) par rapport à la bobine 105 (donc par rapport à l'embase 103) jusqu'à ce que le ou les ensembles 111 se trouvent sensiblement en face des sorties de câble 139.

En pratique, la plaquette 109 est par exemple déformée pour libérer un ou plusieurs ergots portés par une face inférieure de la plaquette 109 et insérés chacun dans un orifice du flasque supérieur 133 de la bobine 105. La plaquette 109 est ensuite tournée puis le ou les ergots sont insérés dans d'autres orifices du flasque supérieur 133 correspondant à une position de la plaquette 109 pour laquelle les ensembles pré-connectorisés 111 sont en face des sorties 139.

L'ordre des opérations représentées par les flèches 601 (blocage de la position angulaire de la bobine par rapport à l'embase) et 603 (rotation de la plaquette par rapport à la bobine) peut être interverti.

La figure 7 illustre une étape ultérieure au cours de laquelle des câbles optiques comprenant chacun une seule fibre optique sont raccordés, au moyen de fiches, aux ensemble pré-connectorisé 111 portés par la plaquette 109. Le fait que les ensembles 111 soient en face des sorties 139 simplifie grandement cette opération.

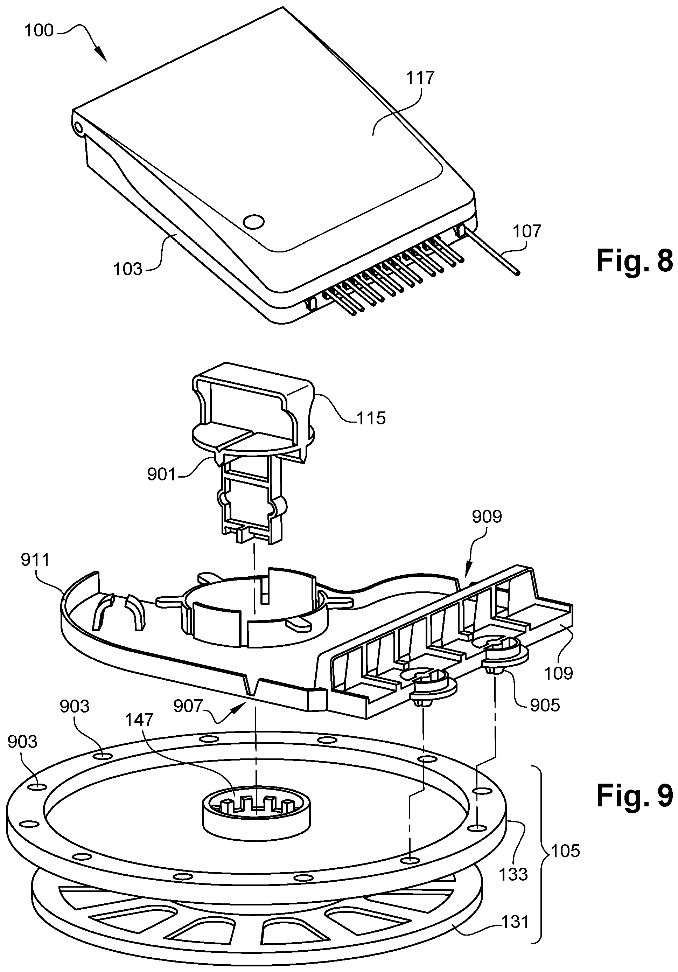

La figure 8 illustre un état dans lequel le point de branchement optique 100 est refermé. Le couvercle 117 protège ainsi les éléments internes au point de branchement optique 100 contre les agressions extérieures (chocs, poussière, eau, etc.). Des ouvertures ménagées dans une face latérale inférieure de l'embase 103 permettent la sortie du câble 107 et des câbles optiques branchés aux ensembles pré-connectorisés 111. Ces câbles optiques sont par exemple reliés chacun à une PTO.

La figure 9 est une vue en perspective de la bobine 105, de la plaquette 109 et du bouton 115.

Les flasques inférieur 131 et supérieur 133 de la bobine 105 sont par exemple fabriqués séparément puis assemblés.

Dans l'exemple représenté, la roue crantée 147 de la bobine 105 présente une géométrie en creux répétée et correspondant à une contre-forme de la géométrie de dents ou crans 901 situés en partie inférieure du bouton 115.

Le bouton 115 est translatable selon une course définie, supérieure à la hauteur des crans de la roue crantée 147. Lorsque les dents du bouton 115 ne sont pas en contact avec les creux de la roue 147, la rotation de la bobine 105 par rapport à l'embase 103 est possible. En revanche, lorsque les dents du bouton 115 sont en contact avec les creux de la roue 147, la rotation de la bobine 105 par rapport à l'embase 103 est impossible.

Le bouton 115 présente une géométrie permettant un comportement bistable, par exemple au moyen de parties latérales déformables (flancs courbes d'une partie verticale du bouton 115 destinée à s'insérer dans l'embase 103).

Le flasque supérieur 133 de la bobine 105 comprend au moins deux orifices répartis annulairement en périphérie du flasque supérieur 133 et destinés à recevoir chacun un ergot 905, ou pion, de la plaquette 109.

La plaquette 109 comprend en outre un amincissement formant charnière 907 et des encoches 909 situées dans une couronne externe 911 de la plaquette 109, dans le prolongement de l'amincissement. Lors du repositionnement angulaire de la plaquette 109 par rapport à la bobine 105 après déroulage du câble optique 107, cela facilite la flexion de la partie de la plaquette 109 portant les ergots 905 par rapport à la partie de la plaquette 109 située à proximité de l'axe de rotation, particulièrement dans un cas où la plaquette 109 est bloquée en translation par rapport à la bobine 105 et à l'embase 103.

La plaquette 109 est par exemple constituée d'une seule pièce, par exemple en matière plastique, par exemple réalisée par injection. Elle combine une fonction de maintien des ensembles pré-connectorisés 111 et de blocage de rotation par rapport à la bobine 105.

De façon avantageuse, le bouton 115, les éléments de blocage de la position angulaire de la bobine 105 par rapport à l'embase 103 et les éléments de blocage de la position angulaire de la plaquette 109 par rapport à la bobine 105 sont agencés de sorte qu'à chaque position angulaire de blocage de la bobine par rapport à l'embase corresponde une position angulaire de blocage de la plaquette par rapport à la bobine dans laquelle le ou les ensembles pré-connectorisés 111 se trouvent approximativement face aux sorties de câble 139 du boîtier 150. À ces fins, il est par exemple prévu un nombre d'orifices 903 égal au nombre de crans de la roue crantée 147, les orifices 903 étant alignés radialement par rapport aux crans.

Dans l'exemple illustré, douze crans sur la bobine 105 autorisent douze positions différentes possibles de la bobine 105 par rapport à l'embase 103, et douze orifices 903 autorisent douze positions différentes possibles pour la plaquette 109 (comprenant deux ergots 905) par rapport à la bobine 105.

Un avantage des modes de réalisation décrits tient au fait que les opérations à mettre en œuvre pour installer le point de branchement optique 100 sont moins nombreuses et plus aisées que dans le cas des points de branchement optique existants. En outre, aucune opération de connectorisation de fibre optique sur site n'est requise lors de l'installation du point de branchement optique 100.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, ce qui est exposé plus particulièrement en relation avec un exemple d'application dans lequel le câble de télécommunications est un câble optique s'applique plus généralement à tout type de de câble de télécommunications.

Enfin, la mise en œuvre pratique des modes de réalisation et variantes décrits est à la portée de la personne du métier à partir des indications fonctionnelles données ci-dessus. En particulier, les modes de réalisation décrits ne se limitent pas aux exemples particuliers de matériaux et de dimensions mentionnés dans la présente description.

## Revendications

1. Boîtier (150) pour enroulement de câble (107) comprenant :
- une embase (103) ;
- une bobine (105) d'enroulement du câble montée à rotation par rapport à l'embase ;
- une plaquette (109) de réception d'au moins un ensemble pré-connectorisé (111) du câble, la plaquette étant montée à rotation coaxialement à la bobine ; et
- des éléments de blocage de la position angulaire de la plaquette par rapport à la bobine.

2. Boîtier (150) selon la revendication 1, dans lequel les éléments de blocage de la position angulaire de la plaquette (109) par rapport à la bobine (105) comprennent, côté bobine, au moins deux orifices (903) répartis annulairement et, côté plaquette, au moins un ergot (905).

3. Boîtier (150) selon la revendication 2, dans lequel la bobine (105) comprend, de part et d'autre d'un moyeu de réception du câble, un premier flasque (131) côté embase (103) et un deuxième flasque (133) côté plaquette (109).

4. Boîtier (150) selon la revendication 3, dans lequel les orifices (905) sont situés en périphérie du deuxième flasque (933).

5. Boîtier (150) selon l'une quelconque des revendications 1 à 4, dans lequel la plaquette (109) est destinée à être tournée par rapport à la bobine (105) de sorte que ledit au moins un ensemble pré-connectorisé (111) se trouve approximativement face à au moins une sortie de câble (139) du boîtier.

6. Boîtier (150) selon la revendication 5, dans lequel la plaquette (109) est destinée à recevoir plusieurs ensembles pré-connectorisés (111) alignés et destinés à se trouver respectivement face à plusieurs sorties de câble (139) du boîtier.

7. Boîtier (150) selon l'une quelconque des revendications 1 à 6, dans lequel la plaquette (109) comprend un amincissement (907) formant charnière et des encoches (909) situées dans une couronne externe (911) de la plaquette, dans le prolongement de l'amincissement.

8. Boîtier (150) selon l'une quelconque des revendications 1 à 7, comprenant en outre des éléments de blocage de la position angulaire de la bobine (105) par rapport à l'embase (103).

9. Boîtier (150) selon la revendication 8 dans sa dépendance à la revendication 5 ou 6, dans lequel les éléments de blocage de la position angulaire de la bobine (105) par rapport à l'embase (103) et les éléments de blocage de la position angulaire de la plaquette (109) par rapport à la bobine sont agencés de sorte qu'à chaque position angulaire de blocage de la bobine par rapport à l'embase corresponde une position angulaire de blocage de la plaquette par rapport à la bobine dans laquelle le ou les ensembles pré-connectorisés (111) se trouvent approximativement face à la ou aux sorties de câble (139) du boîtier.

10. Boîtier (150) selon la revendication 8 ou 9, dans lequel les éléments de blocage de la position angulaire de la bobine (105) par rapport à l'embase (103) comprennent, côté bobine, une roue crantée (147) et, côté embase, un bouton de blocage (115) adapté à être translaté coaxialement à la bobine et coopérant avec la roue crantée.

11. Boîtier (150) selon la revendication 10 dans sa dépendance à la revendication 2, dans lequel le nombre d'orifices (903) est égal au nombre de crans de la roue crantée (147), les orifices étant alignés radialement par rapport aux crans.

12. Point de branchement optique (100) comprenant :
- le boîtier (150) selon l'une quelconque des revendications 1 à 11 ; et
- un câble optique (107) enroulé sur la bobine et comprenant des première et deuxième extrémités destinées à être raccordées respectivement à l'extérieur du boîtier et audit au moins un ensemble pré-connectorisé (111).

13. Procédé d'installation du point de branchement optique (100) selon la revendication 12 dans sa dépendance à la revendication 2, le procédé comprenant les étapes successives suivantes :
a) déroulage du câble optique (107) par traction sur sa première extrémité entraînant une rotation de la bobine (105) et de la plaquette (109) autour de l'axe de rotation de la bobine, ledit au moins un ergot (905) se trouvant dans un premier orifice parmi lesdits au moins deux orifices (903) ;
b) désengagement dudit au moins un ergot par rapport au premier orifice, par déformation de la plaquette (109) ;
c) rotation de la plaquette par rapport à la bobine ; et
d) engagement dudit au moins un ergot dans un deuxième orifice parmi lesdits au moins deux orifices.

14. Procédé selon la revendication 13 dans sa dépendance à la revendication 5 ou 6, dans lequel, à l'étape c), la plaquette (109) est tournée par rapport à la bobine (105) de sorte que le ou les ensembles pré-connectorisés (111) se trouvent approximativement face à la ou aux sorties de câble (139) du boîtier (150).

15. Procédé selon la revendication 13 ou 14 dans leur dépendance à la revendication 8, le procédé comprenant en outre, en utilisant les éléments de blocage de la position angulaire de la bobine (105) par rapport à l'embase (103) :
- préalablement à l'étape a), une étape de libération de la rotation de la bobine (105) par rapport à l'embase (103) ; et
- entre les étapes a) et b), une étape de blocage de la rotation de la bobine (105) par rapport à l'embase (103).
